Europäisches Patentamt

European Patent Office

Office européen des brevets

(11) Veröffentlichungsnummer: **0 308 619 B1**

(12) **EUROPÄISCHE PATENTSCHRIFT**

(45) Veröffentlichungstag der Patentschrift: **11.03.92**

(51) Int. Cl.⁵: **F16B 13/06**

(21) Anmeldenummer: **88112085.1**

(22) Anmeldetag: **27.07.88**

(54) **Spreizdübel.**

(30) Priorität: **22.09.87 DE 3731818**

(43) Veröffentlichungstag der Anmeldung:
**29.03.89 Patentblatt 89/13**

(45) Bekanntmachung des Hinweises auf die
Patenterteilung:
**11.03.92 Patentblatt 92/11**

(84) Benannte Vertragsstaaten:
**AT BE CH DE ES FR GB IT LI NL SE**

(56) Entgegenhaltungen:
EP-A- 0 163 152     CH-A- 459 665
CH-A- 473 988       DE-A- 2 221 267
DE-A- 3 025 816     DE-A- 3 146 027
FR-A- 2 269 652

(73) Patentinhaber: **HILTI Aktiengesellschaft**

**FL-9494 Schaan(LI)**

(72) Erfinder: **Bergner, Arndt**
**Haderunstrasse 29**
**W-8000 München 70(DE)**

(74) Vertreter: **Wildi, Roland**
**Hilti Aktiengesellschaft Patentabteilung**
**FL-9494 Schaan(LI)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft einen Spreizdübel mit einem Ankerbolzen, dessen zylindrischer Schaft eine als konkave Wölbung ausgebildete, in Setzrichtung verlaufende Erweiterung aufweist und der Schaft, an dem dieser Erweiterung abgewandten Ende Angriffsmittel zur Lastaufnahme trägt, wobei der Ankerbolzen von einer relativ dazu verschiebbaren, zumindest teilweise vom setzrichtungsseitigen Ende her längsgeschlitzten Spreizhülse umgeben ist, deren Innendurchmesser dem Aussendurchmesser des Schaftes entspricht und die Spreizhülse an ihrem in Setzrichtung vorderen Ende einen umlaufenden Schneidzahn aufweist, der ein im wesentlichen sägezahnförmiges, zum Mantel hin offenes Profil mit in Setzrichtung weisender steilerer Flanke besitzt.

Spreizdübel der genannten, aus der DE-A-31 46 027 bekannten Art werden verankert, indem die Spreizhülse unter radialer Aufweitung über die Erweiterung des sich am Bohrlochgrund abstützenden Ankerbolzens getrieben wird. Der am vorderen Ende der Spreizhülse angeordnete Schneidzahn schafft sich dabei selbst einen Hinterschnitt im Aufnahmematerial. Beim Aufbringen einer Zuglast am Ankerbolzen erfolgt eine Nachspreizung der Spreizhülse. Aufgrund des relativ flachen Konus der Erweiterung des Ankerbolzens entstehen bei diesem Spreizdübel sehr hohe Spreizkräfte. Diese Spreizkräfte können eine Sprengwirkung auf das Aufnahmematerial ausüben. Der genannte Spreizdübel ist daher nur bedingt für Befestigungen in der gerissenen Zugzone eines Bauwerkes geeignet. Ausserdem ist der Energiebedarf beim Vortreiben der Spreizhülse infolge des einzigen Schneidzahnes relativ hoch.

Aus der EP-A-0 163 152 ist ein gattungsmässig abweichender Spreizdübel bekannt, dessen Ankerbolzen über ein Gewinde verbunden eine als konkave Wölbung ausgebildete Erweiterung aufweist. Allerdings ist dieser konkaven Wölbung entgegen der Setzrichtung eine konische Erweiterung benachbart. Somit ist in einer ersten Phase bei einer Relativverschiebung zwischen Ankerbolzen und Spreizhülse diese konische Erweiterung für die Aufweitung der Spreizhülse massgebend. Dadurch erfolgt in dieser Phase ein wegabhängiges, gleichmässiges Aufweiten der Spreizhülse, was für einen Spreizdübel dieser bekannten Gattung genügt, für einen Spreizdübel, dessen Spreizhülse eine Schneidfunktion erfüllen soll, jedoch nicht ausreicht.

Einen Spreizdübel, dessen Spreizhülse in der Lage ist, eine Schneidfunktion auszüuben, ist aus der CH-A-459 665 bekannt. Allerdings ist dieser bekannte Spreizdübel für Befestigungen in der gerissenen Zugzone ungeeignet, da das am Ankerbolzen angeordnete Angriffsmittel mit der Spreizhülse verbunden ist.

Der Erfindung liegt die Aufgabe zugrunde, einen Spreizdübel zu schaffen, der mit geringem Energieaufwand setzbar ist und der ein für Befestigungen in der gerissenen Zugzone geeignetes Nachspreizverhalten aufweist.

Erfindungsgemäss wird dies dadurch erreicht, dass die als konkave Wölbung ausgebildete Erweiterung in Setzrichtung an den zylindrischen Schaft des Ankerbolzens anschliesst, am Mantel der Spreizhülse entgegen der Setzrichtung anschliessend an den umlaufenden Schneidzahn weitere derartige Schneidzähne angeordnet sind und die Spreizhülse in dem entgegen der Setzrichtung an die Schneidzähne angrenzenden Bereich eine Querschnittsverjüngung aufweist.

Die konkave Wölbung der Erweiterung schafft eine in Setzrichtung zunehmende Konizität. Der Widerstand beim Vortreiben der Spreizhülse ist daher zu Beginn des Spreizvorganges gering und nimmt anschliessend zu. Beim Nachspreizverhalten des Dübels kommt es nach anfänglichem Nachspreizen schliesslich infolge der zunehmenden Erweiterung zu einem Stillstand.

Die Anordnung mehrerer Schneizähne führt nach dem Prinzip einer Räumnadel zu einer Verteilung des an der Bohrlochwandung abzutragenden Aufnahmematerials auf die einzelnen Schneidzähne. Durch diese Verteilung wird eine Ueberbelastung der Schneidzähne vermieden. Das sägezahnförmige Profil der Schneidzähne ist vorzugsweise so ausgebildet, dass die steilere Flanke in Setzrichtung und flachere Flanke entgegen der Setzrichtung gerichtet ist.

Beim Setzvorgang erfolgt eine relativ starke Verformung der Spreizhülse im Spreizbereich. Um diese Verformung der Spreizhülse zu erleichtern, ist an dem entgegen der Setzrichtung an die Schneidzähne angrenzenden Bereich der Spreizhülse eine Querschnittsverjüngung vorgesehen. Durch eine solche Querschnittsverjüngung können die durch die Längsschlitze der Spreizhülse gebildeten Lappen ohne grösseren Kraftaufwand beim Auflaufen auf die Erweiterung des Ankerbolzens nach aussen gebogen werden. Da die Querschnittsverjüngung bei der Belastung des Spreizdübels nur auf Druck beansprucht wird, hat die Querschnittsverjüngung auf den Verankerungswert des Dübels keinen negativen Einfluss.

Für eine günstige Verteilung der beim Abtragen des Aufnahmematerials an der Bohrlochwandung auftretenden Kräfte ist es zweckmässig, insgesamt drei Schneidzähne vorzusehen. Die drei Schneidzähne werden vorzugsweise etwa in gleichen axialen Abständen voneinander angeordnet, so dass beim Setzvorgang jeder Schneidzahn etwa den gleichen Anteil des Aufnahmematerials an der Bohrlochwandung abzutragen hat.

Beim Setzvorgang werden die Schneidzähne unterschiedlich weit in das Aufnahmematerial an der Bohrlochwandung eingetrieben. Das von den Schneidzähnen abgetragene Aufnahmematerial füllt dabei die zwischen den Schneidzähnen angeordneten Zwischenräume auf. Die radial gemessene Tiefe der die Schneidzähne bildenden Einschnürungen nimmt vorteilhafterweise entgegen der Setzrichtung ab. Die durch die Einschnürungen gebildeten Zwischenräume werden somit entgegen der Setzrichtung kleiner. Dadurch wird gewährleistet, dass die Zwischenräume durch das von den Schneidzähnen abgetragene Aufnahmematerial aufgefüllt werden und es im Bereich der Zwischenräume zu einer zusätzlichen, den Auszugswert erhöhenden Verkeilung kommt.

Die konkave Wölbung wird zweckmässigerweise von einem Radius gebildet. Eine solche, durch einen Radius gebildete konkave Wölbung ist einfach herstellbar und ergibt eine günstige Auflaufkurve für die Spreizhülse.

Der Radius entspricht vorteilhafterweise etwa dem grössten Durchmesser des Ankerbolzens. Ein in diesem Bereich liegender Radius ergibt eine gute Aufspreizung der Spreizhülse beim Setzvorgang und ein günstiges Nachspreizverhalten. Ausserdem verhindert ein etwa dem grössten Durchmesser des Ankerbolzens entsprechender Radius das Auftreten einer Kerbwirkung.

Die Querschnittsverjüngung ist vorteilhaft durch eine an der Aussenseite der Spreizhülse angeordnete Ringnut gebildet. Eine solche, an der Aussenseite der Spreizhülse angeordnete Ringnut ist relativ einfach herstellbar. Da die Ringnut beim Nachaussenbiegen der durch die Längsschlitze gebildeten Segmente der Spreizhülse wenigstens teilweise geschlossen wird, führt die Ringnut praktisch nicht zu einer Verkleinerung der Anlagefläche der Spreizhülse an der Bohrlochwandung.

Die Erfindung soll nachstehend anhand der sie beispielsweise wiedergebenden Zeichnungen näher erläutert werden. Es zeigen:

Fig. 1    einen erfindungsgemässen Spreizdübel, in ungespreiztem Zustand,

Fig. 2    einen Ausschnitt des in Fig. 1 dargestellten Spreizdübels, in vergrössertem Massstab,

Fig. 3    den Spreizdübel gemäss Fig. 1 nach dem Vortreiben der Spreizhülse,

Fig. 4    den Spreizdübel gemäss Fig. 1 bis 3, in fertig verankertem Zustand.

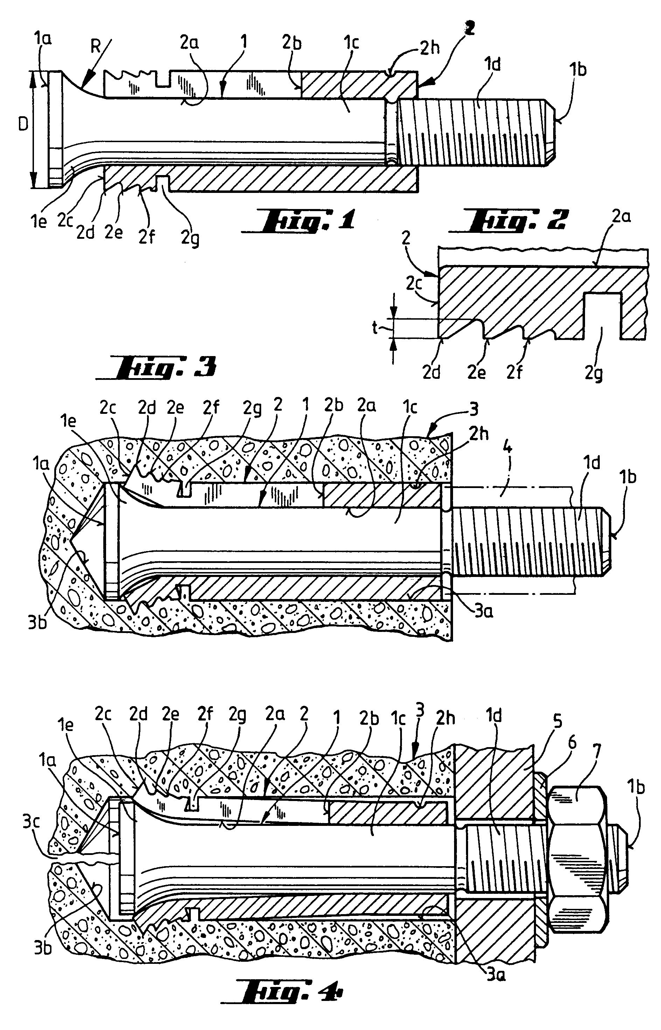

Der aus Fig. 1 bis 4 ersichtliche Spreizdübel besteht aus einem Ankerbolzen 1 und einer diesen umgebenden, gegenüber dem Ankerbolzen 1 axial verschiebbaren Spreizhülse 2. Der Ankerbolzen 1 weist ein in Setzrichtung vorderes Ende 1a und ein rückwärtiges Ende 1b auf. Der mittlere Bereich des Ankerbolzens 1 ist als zylindrischer Schaft 1c ausgebildet. Der rückwärtige Endbereich des Schaftes 1c trägt ein Gewinde 1d als Angriffsmittel zur Lastaufnahme. An den zylindrischen Schaft 1c schliesst sich in Setzrichtung eine Erweiterung 1e an. Die Erweiterung 1e ist als konkave Wölbung ausgebildet. Der Radius R der Wölbung entspricht etwa dem grössten Durchmesser D des Ankerbolzens 1. Die konkave Wölbung der Erweiterung 1e ergibt eine zum vorderen Ende 1a zunehmende Konizität.

Die Spreizhülse 2 weist eine Bohrung 2a auf, deren Innendurchmesser etwa dem Aussendurchmesser des Schaftes 1c entspricht. Die Spreizhülse ist mit der radialen Aufweitbarkeit dienenden Längsschlitzen 2b versehen. An ihrem in Setzrichtung vorderen Ende 2c weist die Spreizhülse 2 einen umlaufenden Schneidzahn 2d auf. Entgegen der Setzrichtung sind am Mantel der Spreizhülse 2 zwei weitere Schneidzähne 2e, 2f angeordnet. Die Schneidzähne 2d, 2e, 2f weisen ein im wesentlichen sägezahnförmiges, zum Mantel hin offenes Profil auf, wobei die steilen Flanken gegen das vordere Ende 2c und die flachen Flanken entgegen der Setzrichtung gerichtet sind. In dem entgegen der Setzrichtung an die Schneidzähne 2d, 2e, 2f angrenzenden Bereich ist die Spreizhülse 2 mit einer durch eine Ringnut 2g gebildeten Querschnittsverjüngung versehen. Diese Querschnittsverjüngung dient einer besseren Verformung der Spreizhülse beim Setzvorgang. Die Spreizhülse 2 weist in ihrem rückwärtigen Endbereich eine oder mehrere Einprägungen 2h auf, welche auf der Innenseie in das Gewinde 1d eingreifende Vorsprünge schaffen und zum axialen Sichern der Spreizhülse 2 auf dem Ankerbolzen 1 dienen.

Wie insbesondere Fig. 2 zeigt, nimmt die radial gemessene Tiefe t der die Schneidzähne 2d, 2e, 2f bildenden Einschnürungen entgegen der Setzrichtung ab. Durch diese abnehmende Tiefe wird gewährleistet, dass die Zwischenräume zwischen den Schneidzähnen 2d, 2e, 2f durch das von den Schneidzähnen abgetragene Aufnahmematerial gefüllt werden und es bei einer Zugbelastung des Ankerbolzens zu einer Verkeilung dieses Aufnahmematerials kommt.

In Fig. 3 ist der Spreizdübel in ein Bohrloch 3a eines Aufnahmematerials 3 eingesetzt. Der Ankerbolzen 1 stützt sich dabei mit seinem vorderen Ende 1a am Bohrlochgrund 3b ab. Die Spreizhülse 2 ist mit Hilfe eines rohrförmigen Setzwerkzeuges 4 über die Erweiterung 1e des Ankerbolzens 1 getrieben worden. Die durch die Einprägungen 2h geschaffenen Vorsprünge an der Innenseite der Spreizhülse 2 wurden dabei abgeschert. Die Schneidzähne 2d, 2e, 2f greifen in die Wandung des Bohrloches 3a ein und tragen einen Teil des Aufnahmematerials 3 ab. Somit entsteht eine formschlüssige Verbindung der Spreizhülse 2 mit dem Aufnahmematerial 3. Die an der Aussenseite der Spreizhülse 2 angeordnete Ringnut 2g sowie die Längsschlitze 2b erleichtern das radiale Aufweiten der Spreizhülse 2.

In Fig. 4 ist ein zu befestigendes Bauteil 5 auf das Gewinde 1d des Ankerbolzens 1 aufgesteckt und mittels einer Unterlagscheibe 6 sowie einer auf das Gewinde 1b aufgeschraubten Mutter 7 befestigt. Im Bereich des Bohrloches 3a befindet sich ein Riss 3c im Aufnahmematerial 3. Das Oeffnen dieses Risses 3c ermöglicht ein Einziehen des Ankerbolzens 1 in die im Aufnahmematerial 3 formschlüssig verankerte Spreizhülse 2. Durch die am vorderen Ende 1a sehr starke Konizität der Erweiterung 1e ist die Spreizwirkung des Spreizdübels auf den Riss 3c gering. Nach einer anfänglichen Nachspreizung kommt diese schliesslich zum Stillstand.

## Patentansprüche

1. Spreizdübel mit einem Ankerbolzen (1), dessen zylindrischer Schaft (1c) eine als konkave Wölbung ausgebildete, in Setzrichtung verlaufende Erweiterung (1e) aufweist und der Schaft (1c), an dem dieser Erweiterung abgewandten Ende Angriffsmittel (1d) zur Lastaufnahme trägt, wobei der Ankerbolzen (1) von einer relativ dazu verschiebbaren, zumindest teilweise vom setzrichtungsseitigen Ende her längsgeschlitzten Spreizhülse (2) umgeben ist, deren Innendurchmesser dem Aussendurchmesser des Schaftes (1c) entspricht und die Spreizhülse (2) an ihrem in Setzrichtung vorderen Ende (2c) einen umlaufenden Schneidzahn (2d) aufweist, der ein im wesentlichen sägezahnförmiges, zum Mantel hin offenes Profil mit in Setzrichtung weisender steilerer Flanke besitzt, **dadurch gekennzeichnet,** dass sich die als konkave Wölbung ausgebildete Erweiterung (1e) in Setzrichtung an den zylindrischen Schaft (1c) des Ankerbolzens (1) anschliesst, am Mantel der Spreizhülse (2) entgegen der Setzrichtung anschliessend an den umlaufenden Schneidzahn (2d) weitere derartige Schneidzähne (2e, 2f) angeordnet sind und die Spreizhülze (2) in dem entgegen der Setzrichtung an die Schneidzähne (2d, 2e, 2f) angrenzenden Bereich eine Querschnittsverjüngung aufweist.

2. Spreizdübel nach Anspruch 1, dadurch gekennzeichnet, dass insgesamt drei Schneidzähne (2d, 2e, 2f) vorgesehen sind.

3. Spreizdübel nach Anspruch 1 oder 2, dadurch gekennzeichnet, dass die radial gemessene Tiefe (t) der die Schneidzähne bildenden Einschnürungen entgegen der Setzrichtung abnimmt.

4. Spreizdübel nach einem der Ansprüche 1 bis 3, dadurch gekennzeichnet, dass die konkave Wölbung von einem Radius (R) gebildet ist.

5. Spreizdübel nach Anspruch 4, dadurch gekennzeichnet, dass der Radius (R) etwa dem grössten Durchmesser (D) des Ankerbolzens (1) entspricht.

6. Spreizdübel nach einem der Ansprüche 1 bis 5, dadurch gekennzeichnet, dass die Querschnittsverjüngung durch eine an der Aussenseite der Spreizhülse (2) angeordnete Ringnut (2g) gebildet ist.

## Claims

1. An expansible dowel having a tie bolt (1), the cylindrical shank (1c) of which has a widening (1e) designed as a concave arch and extending in the setting direction and, at the end remote from this widening, the shank (1c), bears attack means (1d) for the load reception, in which respect the tie bolt (1) is surrounded by an expansible sleeve (2) which is displaceable relative thereto and which is longitudinally slotted at least partially from the setting-direction-sided end and the inside diameter of which corresponds to the outside diameter of the shank (1c) and the expansible sleeve (2) at its front end (2c) in the setting direction has an encircling cutting tooth (2d), which possesses a substantially saw-tooth-shaped profile, open towards the jacket, with the steeper flank pointing in the setting direction, characterised in that the widening (1e) designed as a concave arch is adjacent in the setting direction to the cylindrical shank (1c) of the tie bolt (1), on the jacket of the expansible sleeve (2) contrary to the setting direction adjacent to the encircling cutting tooth (2d) further such cutting teeth (2e, 2f) are arranged and the expansible sleeve (2) in the region contiguous contrary to the setting direction to cutting teeth (2d, 2e, 2f) has a cross-sectional narrowing.

2. An expansible dowel according to claim 1, characterised in that altogether three cutting teeth (2d, 2e, 2f) are provided.

3. An expansible dowel according to claim 1 or 2, characterised in that the radially measured depth (t) of the constrictions forming the cutting teeth decreases contrary to the setting direction.

**4.** An expansible dowel according to one of claims 1 to 3, characterised in that the concave arch is formed by a radius (R).

**5.** An expansible dowel according to claim 4, characterised in that the radius (R) corresponds approximately to the greatest diameter (D) of the tie bolt (1).

**6.** An expansible dowel according to one of claims 1 to 5, characterised in that the cross-sectional narrowing is formed by an annular groove (2g) arranged on the outside of the expansible sleeve (2).

**Revendications**

**1.** Cheville expansible pourvue d'un boulon d'ancrage (1), dont la tige cylindrique (1c) présente un élargissement (1e) s'étendant dans la direction de pose, formé par un épanouissement à courbure concave et la tige (1c), à l'extrémité éloignée de cet élargissement, porte des moyens d'application (1d) en vue de la réception d'une charge, le boulon d'ancrage (1) étant entouré par une douille expansible (2) déplaçable par rapport à celui-ci, fendue longitudinalement au moins partiellement depuis l'extrémité du côté de la direction de pose, dont le diamètre intérieur correspond au diamètre extérieur de la tige (1c) et la douille expansible (2) présente,à son éxtrémité antérieure (2c) dans la direction de pose,une dent de coupe circulaire (2d), qui possède un profil ouvert en direction de la surface latérale, sensiblement en forme de dents de scie avec des flancs raides orientés dans la direction de pose, caractérisée en ce que l'élargissement (1e),formé par un épanouissement à courbure concave, se raccorde dans la direction de pose à la tige cylindrique (1c) du boulon d'ancrage (1), d'autres dents de coupe semblables (2e,2f) étant disposées sur la surface latérale de la douille expansible (2) dans la direction opposée à la direction de pose, juxtaposées à la dent de coupe circulaire (2d), et la douille expansible (2) présente une réduction de section dans la zone adjacente aux dents de coupe (2d,2e,2f) dans la direction opposée à la direction de pose.

**2.** Cheville expansible selon la revendication 1, caractérisée en ce que trois dents de coupe (2d,2e,2f) en tout sont prévues.

**3.** Cheville expansible selon la revendication 1 ou 2, caractérisée en ce que la profondeur (t), mesurée radialement, des rétrécissements formant les dents de coupe diminue dans la direction opposée à la direction de pose.

**4.** Cheville expansible selon l'une quelconque des revendications 1 à 3, caractérisée en ce que l'épanouissement à courbure concave est formé par un rayon (R).

**5.** Cheville expansible selon la revendication 4, caractérisée en ce que le rayon (R) correspond approximativement au plus grand diamètre (D) du boulon d'ancrage (1).

**6.** Cheville expansible selon l'une quelconque des revendications 1 à 5, caractérisée en ce que la réduction de section est formée par une gorge annulaire (2g) pratiquée sur le côté extérieur de la douille expansible (2).

*Fig. 1*

*Fig. 2*

*Fig. 3*

*Fig. 4*